# EUROPEAN PATENT SPECIFICATION

(11) **EP 1 705 995 B1**
(45) Date of publication and mention of the grant of the patent: **18.02.2009**
(21) Application number: 05715181.3
(22) Date of filing: 10.01.2005
(51) Int. Cl.: A21D 10/04, A23L 1/05, A23L 1/00

(54) **BATTER MIX CONTAINING MODIFIED STARCH**
TEIGMISCHUNG, DIE MODIFIZIERTE STÄRKE ENTHÄLT
PATE D'ENROBAGE COMPRENANT DE L'AMIDON MODIFIE

(30) Priority: 14.01.2004 EP 04250158
(43) Date of publication of application: 04.10.2006
(73) Proprietor: Cerestar Holding B.V., 4551 LA Sas Van Gent (NL)
(72) Inventor: SARNEEL, Frans, Johan, NL-4574 RJ Zuiddorpe (NL); PEREMANS, Johan, Augusta, Maria, Antoon, B-2180 Ekeren (BE)
(74) Representative: Wilkinson, Stephen John
(86) International application number: PCT/EP2005/000138
(87) International publication number: WO 2005/067720

(56) References cited:
- EP-A- 1 159 876
- EP-A- 1 462 005
- US-A- 3 767 826
- PATENT ABSTRACTS OF JAPAN vol. 2003, no. 12, 5 December 2003 (2003-12-05) & JP 2005 000081 A (MATSUTANI CHEM IND LTD), 6 January 2005 (2005-01-06)

## Description

### Technical field

The present invention relates to a batter mix comprising starch alkenyl succinate and a bleached and/or oxidised starch and to the use of such a mix in the preparation of batters for use in coating food products. The invention further relates to food products coated with said batters and to processes for their production.

### Background of the invention

A wide variety of food products currently on the market (especially in the fields of convenience food and so-called "fast food") have a coating or batter applied to them. These include, for example, meat, fish, potato and cheese products. The composition of the coatings or batters is, of course, critical to the eventual appearance, taste and texture of the cooked product and therefore to its success.

One characteristic critical for a successful batter is its adherence, i.e. its ability to adhere to and completely cover a food product. Batter adherence is a particular problem in both frozen and non-frozen foods. Ideally, batters should coat and adhere to the surface of the food product during preparation, eventual freezing and cooking, without compromising on important organoleptic properties such as crispiness and flavour.

Batters comprising various combinations of starches and/or flours have been suggested. Unfortunately however, it has been found that many of these result in coatings which fall off or pull away from their substrate. Others produce only a lacy, uneven covering leading to crumbly coatings.

A possible solution to this problem is put forward in US4,107,338, with the use of starches derived from plants having a defined genetic constitution. These plants are obtained, according to one embodiment, by artificial mutation. The proposal, however, has several clear disadvantages. First, the suggested starch source, by virtue of its highly specific nature, will be limited and therefore expensive. In addition, it will have to be identified, before use, by costly genetic testing. Finally, because of consumer reaction, it has become undesirable to use genetically modified plants in food products.

An alternative solution is suggested in US 3,956,515 with the use of ungelatinised, cold-water swelling starches. Unfortunately, this method also has a number of limitations. Most notably, the attempt to improve adhesiveness has been made at the cost of important organoleptic properties such as crispiness. Batter texture when cooked, and crispiness in particular, are critical for the production of commercially viable food products.

US-A-3,767,826 discloses a batter mix for coating frozen fish and other food products so that breadcrumbs will stick to the food product. The batter mix comprises water and a starch product dry mixed with an oxidizing agent, such as calcium hypochlorite, prior to being formed into a batter.

A composition consisting of 60-95% w/w untreated flour, 5-30% w/w starch n-alkenyl succinate and 0-50% w/w starch for use in bakery products is disclosed in EP-A-1159876.

Thus, there exists a need for an improved batter having good adhesiveness and producing, when cooked, a crisp, even coating. The present invention provides such a product.

### Summary of the invention

According to a first aspect of the present invention, there is provided a batter mix for use in the coating of food products characterised in that it comprises 0.5-10% dry weight, preferably 1.5-8% dry weight starch alkenyl succinate and 20-98% dry weight, preferably 25-80% dry weight bleached and/or oxidised starch. According to one embodiment, the mix may also comprise an additional starchy material selected from: flour, native starch, modified starch and mixtures thereof. It may also comprise water or a water-miscible liquid in a weight ratio of 0.5:1 to 1:1.5 with respect to the total starch content of the mix.

According to a further aspect of the present invention, there is provided the use of a mix as defined above in the preparation of a batter for coating food products.

According to a yet further aspect of the present invention, there is provided a process for the production of a batter for coating food products including the step of mixing:
- 0.5-10% dry weight, preferably 1.5-8% dry weight starch alkenyl succinate;
- 20-98% dry weight, preferably 25-80% dry weight bleached and/or oxidised starch;
- water or a water-miscible liquid; and
- optionally, one or more other starchy materials and/or one or more additives.

According to a further aspect of the present invention, there is provided a batter produced according to the above process.

According to another aspect of the present invention, there is provided the use of a batter as defined above for coating food products.

According to yet another aspect of the present invention, there is provided a method of preparing a batter-coated food product comprising coating a food product with a batter as defined above.

According to a further aspect of the present invention, there is provided a food product prepared according to the above method. In particular, there is provided a meat product coated with a batter comprising starch alkenyl succinate and bleaches and/or oxidised starch.

### Description of the figures

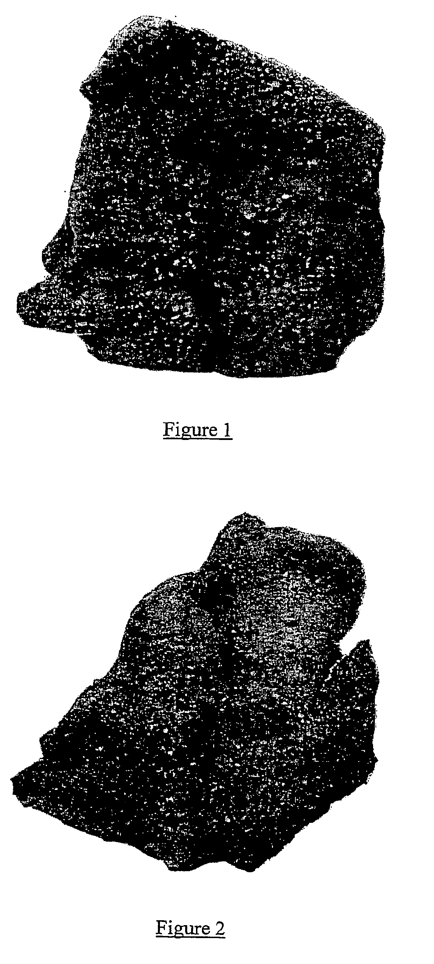

**Figures 1 and 2** show meat products coated with batter mixes of the present invention.

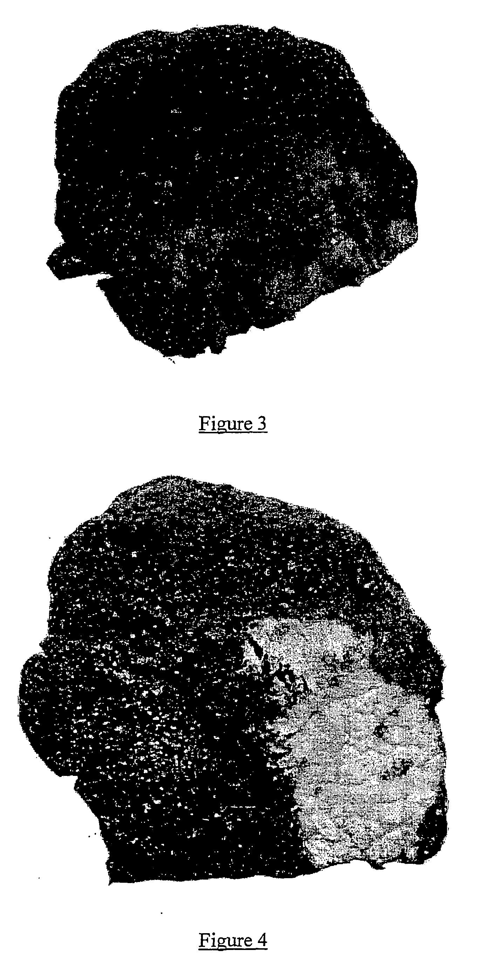

**Figures 3 and 4** are included as comparative examples. They show meat products coated with commercially available batter mixes.

### Detailed description of the invention

The present invention discloses a batter mix for use in the coating of food products comprising both starch alkenyl succinate and a bleached and/or oxidised starch. The batter mix may be a dry batter mix (or "premix") or it may be a liquid mix.

**Starch alkenyl succinates** are characterised by the chain length of their alkenyl group. The starch alkenyl succinate of the present invention may have a C₆ to C₁₆ chain. Preferably, it will have a C₈ (octenyl) chain. Even more preferably, the starch alkenyl succinate will be starch sodium octenyl succinate.

The starch alkenyl succinate may be derived from a starch from any available source including, for example, potato starch, maize starch, wheat starch, rice starch, tapioca starch and a mixture of two or more thereof. Ideally, it will be derived from a waxy starch. Advantageously, the starch alkenyl succinate will be stabilised. A process for preparing stabilised starch alkenyl succinate is described in EP 0811633.

A **bleached starch** is a starch which has been treated with low levels of oxidant to improve whiteness.

An **oxidised starch** is a starch which has been modified by treatment with one or more oxidising agents such as sodium hypochlorite.

The bleached and/or oxidised starches may be of any origin but will advantageously be derived from maize starch, wheat starch or mixtures thereof.

In addition to the above starch alkenyl succinate and bleached and/or oxidised starch, the mix of the present invention may also include **other starchy materials** such as native starches, modified starches (e.g. pregelled and/or granular starches) and flours. The flour can be any standard flour used in cooking (e.g. wheat flour or rice flour) or a blend of flour and starch.

These other starchy materials, in combination with the starch alkenyl succinate and bleached and/or oxidised starch, will be referred to herein as the **total starch** content of the mix and will preferably correspond to 60-100%, more preferably 75-90% by weight of its total dry substance. According to a preferred embodiment, the total starch will consist of 40-100% by dry weight starch alkenyl succinate ("% dry weight" as used herein refers to the dry weight percentage based on total dry substance) and bleached and/or oxidised starch and of 0-60% by dry weight of other starchy materials (preferably flour). According to a more preferred embodiment, the total starch will consist of 40-60% by dry weight starch alkenyl succinate and bleached and/or oxidised starch and of 60-40% by dry weight of other starchy materials. According to an even more preferred embodiment, the total starch will consist of about 50% by dry weight starch alkenyl succinate and bleached and/or oxidised starch and of about 50% by dry weight of other starchy materials.

Thus, whereas it can generally be said that the mix of the present invention comprises 0.5-10%, preferably 1.5-8% by dry weight starch alkenyl succinate and 20-98%, preferably 25-80% by dry weight bleached and/or oxidised starch, the exact amounts of these ingredients will depend, to a large degree, on the amount of other starchy materials used. For example, a composition comprising only 4 parts starch alkenyl succinate and bleached and/or oxidised starch to 6 parts other starchy materials, will comprise 0.5-4%, preferably 1.5-3.5% by dry weight starch alkenyl succinate and 20-39.5%, preferably 25-35% by dry weight bleached and/or oxidised starch. Similarly, a composition comprising about 1 part starch alkenyl succinate and bleached and/or oxidised starch to 1 part other starchy materials, will comprise 1-5%, preferably 2-4% by dry weight starch alkenyl succinate and 30-49%, preferably 35-40% by dry weight bleached and/or oxidised starch. In another example, a composition comprising only starch alkenyl succinate and bleached and/or oxidised starch (and no other starchy materials), will comprise 2-10%, preferably 4-8% by dry weight starch alkenyl succinate and 60-98%, preferably 70-80% by dry weight bleached and/or oxidised starch. In any event, the dry weight ratio of starch alkenyl succinate to bleached and/or oxidised starch should preferably be about 1:6 to 1:50, more preferably about 1:10 to 1:20.

It has indeed surprisingly been found that batters prepared with mixes of starch alkenyl succinate and bleached and/or oxidised starch have stable viscosity levels, good product adherence and desirable organoleptic properties. A stable viscosity, in particular, prevents liquid / dry ingredient separation during storage or resting time (e.g. in a dipping bath). This, in turn, means that the food products being battered will have a more even and complete coating than could otherwise be achieved.

Of course, for the desired viscosity to be obtained, a certain amount of liquid will have to be added to the dry mix. The **liquid** may be water or any other suitable dispersant including, for example, milk, alcohol (e.g. beer), egg, etc. Preferably, however, it will be water or a water-miscible liquid.

The amount of liquid used to make up the composition will of course depend on the type of batter being produced. Thus, if a thin coating is required, a low viscosity batter (e.g. Brookfield viscosity of approximately 75 cps at 23°C) will be used. Conversely, if a thicker coating is required, a higher viscosity batter (e.g. approximately 500 cps) will be used. According to a preferred embodiment of the present invention, the batter viscosity will range from about 150 to about 200 cps. Expressed in terms of Simex viscosity, the batter should have a viscosity of 35 to 90 seconds, preferably 35 to 60 seconds (based on a recipe containing, by way of starchy materials, only starch alkenyl succinate and bleached and/or oxidised starch). The corresponding ratio of liquid to total starch content in the batter will range from approximately 0.5:1 to approximately 1:1.5. Ideally, the weight ratio of liquid to total starch content will be about 1:1.1 by weight.

Thus, the present invention provides a process for the production of a batter for coating food products including the step of mixing:
- 0.5-10% dry weight, preferably 1.5-8% dry weight starch alkenyl succinate;
- 20-98% dry weight, preferably 25-80% dry weight bleached and/or oxidised starch;
- water or a water-miscible liquid; and
- optionally, one or more other starchy materials and/or one or more additives.

The one or more optional **additives** can be selected to enhance or modify the taste, appearance and/or mouth-feel of the batter. Such additives include, but are not limited to, seasoning, spices, flavouring and colouring agents, salt (e.g. table-salt and/or table-salt substitutes), raising agents (such as cream of tarter or sodium bicarbonate), humectants, stabilisers, emulsifiers, foaming agents, egg (whole egg or components thereof, e.g. yolk, in liquid or powdered form), sweeteners (natural or artificial), a source of protein, a source of lipids (e.g. animal and/or vegetable fats, shortening or oil), vitamins and minerals, preservatives and antioxidants. The amounts in which these additives are used, if at all, will depend on the specific application of the batter and on the food product to be coated. Thickening agents (including, for example, mucilaginous and/or proteinaceous materials such as milk and non-fat milk solids, caseinates, wheat gluten, cornmeal, egg albumin, carboxymethylcellulose, alginates, gum arabic, hydroxypropyl cellulose, etc.) may also be incorporated, although, as noted above, they are not required for the improved adhesiveness.

Batters prepared according to the above process also form part of the present invention and have been found to have excellent adhesion properties. They are easy to prepare and can be applied to food products without necessitating the addition of ancillary thickening agents, pre-dusting of the food pieces, costly processing conditions or specialized equipment. Flaking and separation of the batter from the food product (such as normally encountered with conventional starch batters) is not a problem with the batter of the present invention with adhesion being maintained throughout the cooking procedure. The resulting coating is uniform and crispy.

Accordingly, in a further embodiment of the present invention, there is provided the use of batters comprising starch alkenyl succinate and bleached and/or oxidised starch for coating food products.

The food products may be selected from meat and poultry products (such as chicken, turkey, veal meat, pork or beef), fish products (such as cod, haddock or salmon), seafood products (such as crab, scallops, shrimps or lobster), vegetable products (such as eggplant, onion rings, potato and mushrooms), fruit products (such as apple or banana), cheese products and vegetarian products (such as Quorn^{™} or tofu).

The food products may comprise a single ingredient (e.g. a fish finger) or they may be composite products (e.g. a fish cake). They may be whole pieces (e.g. strips of chicken or whole mushrooms) or they may be processed food stuffs which have been shaped into pieces prior to coating (e.g. processed meat products or mashed potato as used, for example, in potato croquettes).

Preferably, if the main food product ingredient is a rough or "easy" substrate (such as meat), the batter should comprise starch alkenyl succinate and a bleached starch. Conversely, if the main food product ingredient is a smooth or "difficult" substrate (such as fish), the batter will preferably comprise starch alkenyl succinate and an oxidised starch.

The food products may be coated using any method known in the art. Thus, the present invention provides a method of preparing batter-coated food products comprising coating food products with a batter comprising starch alkenyl succinate and bleached and/or oxidised starch. In more detail, the coating procedure may comprise any one or more of the following steps.

The method may comprise a preconditioning step wherein, for example, the food product is shaped or cut into pieces of the required size. The product can be coated in its raw state or it may first be pre-cooked or part-cooked (e.g. seared or blanched). It may also be dusted (e.g. with flour, starch or dry batter mix) before the batter is applied, although this step is not necessary for the required adhesiveness to be obtained.

The batter can be applied in any conventional way, including, for example, submerging or dipping, spraying, cascading or curtain coating, encapsulating and rolling or tumbling. Details of all such methods are widely available and need not be repeated here. After coating, excess mix can be removed, if desired, by gentle agitation, by rolling on a clean surface and/or by directing a flow of compressed air towards the coated product.

Often, for products such as fish fingers or coated meats (e.g. schnitzels), the coating step is followed by a breading step. Materials used for breading will ideally have an average particle size of about 0.05 to 3.0 mm and can include cereals, corn meal, corn flakes, cracker crumbs, bread crumbs, biscuit crumbs and the like. Breading can be achieved using any standard method (spraying, sprinlding, rolling, etc.). Alternatively, the breading material can be incorporated into the original batter or batter mix.

The coated and, optionally, breaded products may then be cooked and/or frozen. They can be cooked using any known method including frying (e.g. pan or deep fat frying), baking, grilling or cooking in a microwave or infrared oven. Preferably, they will be fried. The products may be fully cooked or, if not for immediate consumption, only partially cooked. The cooked or partially cooked products may then be frozen.

Food products coated with the above described batter and those prepared according to the above method form part of the present invention which is illustrated in the following, non-limiting example.

### Example 1:

100 parts batter mix (as defined in Table 1) were blended to 110 parts water during 1 minute using a high speed hand-mixer. Viscosity of the mix was measured using the speed of flow from a standardised Simex type 4 DIN cup (Simex viscosity) at 20°C.

Meat pieces were selected amongst both lean and fatty pork meat and cut to size. The meat pieces were then coated in the batter by immersion and pre-fried during 45 seconds at 180°C.

The coated, fried products were then fast frozen during 15 minutes and packed. After 3 days, the frozen product is fried at 180°C for 3.5-4.5 minutes (depending on the thickness of the meat).

The cooked product is then tested for adhesiveness, colour and crispness. The results are shown in Table 1, below.

**Table 1**

| Trial No. | 1 (ref) | 2 | 3 | 4 (ref) | 5 | 6 |
|---|---|---|---|---|---|---|
| C☆Batter Crisp 05530 | 100 | 95 | 90 | | | |
| C☆Batter Crisp 05548 | | | | 100 | 95 | 90 |
| C☆EmTex 06328 | | 5 | 10 | | 5 | 10 |
| Simex viscosity (seconds) | 44 | 48 | 56 | 35 | 41 | 46 |
| Crispness | - | + | ++ | - | + | ++ |
| Adherence | + | + | ++ | + | ++ | ++ |

| | | | | | | |
|---|---|---|---|---|---|---|
| C☆Batter Crisp 05530 = Cerestar bleached corn starch C☆Batter Crisp 05548 = Cerestar oxidised corn starch C☆EmTex 06328 = Cerestar maize starch sodium octenyl succinate | | | | | | |

These results show that a combination of the bleached and/or oxidised starch and starch sodium octenyl succinate leads to good adherence without loss of crispiness. In addition batter viscosity can be stabilised at an appropriate level thus avoiding separation of water from other ingredients. These results were independent of meat quality.

## Claims

1. A batter mix for use in the coating of food products **characterised in that** it comprises 0.5-10% dry weight, preferably 1.5-8% dry weight starch alkenyl succinate and 20-98% dry weight, preferably 25-80% dry weight bleached and/or oxidised starch.

2. A mix according to claim 1 wherein the starch alkenyl succinate is starch octenyl succinate.

3. A mix according to claim 1 or claim 2 wherein the starch alkenyl succinate is starch sodium octenyl succinate. -

4. A mix according to any one of the preceding claims wherein the starch alkenyl succinate is derived from a starch selected from potato starch, maize starch, wheat starch, rice starch, tapioca starch and a mixture of two or more thereof.

5. A mix according to any one of the preceding claims wherein the starch alkenyl succinate is derived from a waxy starch.

6. A mix according to any one of the preceding claims wherein the starch alkenyl succinate is stabilised.

7. A mix according to any proceeding claim wherein the bleached and/or oxidised starch is derived from maize starch, wheat starch and mixtures thereof.

8. A mix according to any one of the preceding claims comprising a further starchy material selected from: flour, native starch, modified starch and mixtures thereof.

9. A mix according to one of the preceding claims further comprising water or a water-miscible liquid in a weight ratio of 0.5:1 to 1:1.5 with respect to the total starch content of the mix.

10. Use of a mix according to any one of the preceding claims in the preparation of a batter for coating food products.

11. A process for the production of a batter for coating food products including the step of mixing:
- 0.5-10% dry weight, preferably 1.5-10% dry weight starch alkenyl succinate:
- 20-98% dry weight, preferably 25-80% dry weight bleached and/or oxidised starch;
- water or a water-miscible liquid; and
- optionally, one or more other starchy materials and/or one of more additives.

12. A process according to claim 11, wherein the one or more other starchy materials are selected from one or more native starches, one or more modified starches, one or more flours and mixtures thereof.

13. A batter produced according to the process of either claim 11 or claim 12.

14. Use of a batter according to claim 13 for coating food products.

15. Use according to claim 14, wherein the food products are selected from: meat, poultry, fish, seafood, vegetable, potato, fruit, cheese and vegetarian products and mixtures thereof.

16. A method of preparing a batter-coated food product comprising coating a food product with a batter according to claim 13.

17. A method according to claim 16, wherein the food product is pre- or part-cooked before being coated.

18. A method according to either claim 16 or claim 17, wherein the coated product is fried or par-fried and/or frozen.

19. A food product prepared according to the method of any one of claims 16-18.

20. A meat product coated with a batter according to claim 13.

## Patentansprüche

1. Teigmischung zur Verwendung bei der Beschichtung von Nahrungsmittelprodukten, **dadurch gekennzeichnet, daß** sie 0,5-10 Trockengewichts-%, bevorzugt 1,5 - 8 Trockengewichts-% Stärkealkenylsuccinat und 20 - 98 Trockengewichts-%, bevorzugt 25 - 80 Trockengewichts-% gebleichte und/oder oxidierte Stärke umfaßt.

2. Mischung nach Anspruch 1, wobei das Stärkealkenylsuccinat Stärkeoctenylsuccinat ist.

3. Mischung nach Anspruch 1 oder Anspruch 2, wobei das Stärkealkenylsuccinat Stärketriumoctenylsuccinat ist.

4. Mischung nach einem der vorstehenden Ansprüche, wobei das Stärkealkenylsuccinat von einer Stärke, ausgewählt aus Kartoffelstärke, Maisstärke, Weizenstärke, Reisstärke, Tapiokastärke und einem Gemisch aus zwei oder mehr davon, abgeleitet ist.

5. Mischung nach einem der vorstehenden Ansprüche, wobei das Stärkealkenylsuccinat von einer Wachsstäke abgeleitet ist.

6. Mischung nach einem der vorstehenden Ansprüche, wobei das Stärkealkenylsuccinat stabilisiert ist.

7. Mischung nach einem der vorstehenden Ansprüche, wobei die gebleichte und/oder oxidierte Stärke von Maisstärke, Weizenstärke und Gemischen davon abgeleitet ist.

8. Mischung nach einem der vorstehenden Ansprüche, umfassend ein weiteres Stärkematerial, ausgewählt aus: Mehl, nativer Stärke, modifizierter Stärke und Gemischen davon.

9. Mischung nach einem der vorstehenden Anspräche ferner umfassend Wasser oder eine mit Wasser mischbare Flüssigkeit in einem Gewichtsverhältnis von 0,5 : 1 bis 1 : 1,5, bezogen auf den Gesamtstärkegehalt der Mischung.

10. Verwendung einer Mischung nach einem der vorstehenden Anspräche bei der Herstellung eines Teiges zur Beschichtung von Nährungsmittelprodukten.

11. Verfahren zur Herstellung eines Teiges zur Beschichtung von Nahrungsmittelprodukten, umfassend den Schritt des Mischens von:
- 0,5 - 10 Trockengewichts-%, bevorzugt 1,5 - 10 Trockengewicht-% Stärkealkenylsuccinat;
- 20 - 98 Trockengewichts-%, bevorzugt 25 - 80 Trockengewichts-% gebleichter und/oder oxidierter Stärke;
- Wasser oder einer mit Wasser mischbaren Flüssigkeit; und
- gegebenenfalls eines oder mehrerer anderer Stärkematerialien und/oder eines oder mehrerer er Additive.

12. Verfahren nach Anspruch 11, wobei das eine oder die mehreren anderen Stärkematerialien aus einer oder mehreren nativen Stärken, einer oder mehreren modifizierten Stärken, einem oder mehreren Mehlen und Gemischen davon ausgewählt ist/sind.

13. Teig, hergestellt nach dem Verfahren nach Anspruch 11 oder Anspruch 12.

14. Verwendung eines Teiges nach Anspruch 13 zur Beschichtung von Nahrungsmittelprodukten.

15. Verwendung nach Anspruch 14, wobei die Nahrungsmittelprodukte ausgewählt sind aus: Fleisch, Geflügel, Fisch, Meeresfrüchten, Gemüse, Kartoffeln, Früchten, Käse und vegetarischen Produkten und Gemischen davon.

16. Verfahren zur Herstellung eines mit Teig beschichteten Nahrungsmittelproduktes, umfassend das Beschichten eines Nahrungsmittelproduktes mit einem Teig nach Anspruch 13.

17. Verfahren nach Anspruch 16, wobei das Nahrungsmittelprodukt vor dem Beschichten vor- oder teilweise gekocht wird.

18. Verfahren nach Anspruch 16 oder Anspruch 17, wobei das beschichtete Produkt gebraten oder vorgebacken und/oder eingefroren wird.

19. Nahrungsmittelprodukt, hergestellt nach dem Verfahren gemäß einem der Ansprüche 16-18.

20. Fleischprodukt, beschichtet mit einem Teig nach Anspruch 13.

## Revendications

1. Mélange pour pâte à frire destiné à être utilisé dans l'enrobage de produits alimentaires **caractérisé en ce qu'**il comprend de 0,5 à 10 % en poids sec, de préférence de 1,5 à 8 % en poids sec de succinate d'alcényle d'amidon et de 20 à 98 % en poids sec, de préférence de 25 à 80 % en poids sec d'amidon blanchi et/ou oxydé.

2. Mélange selon la revendication 1, dans lequel le succinate d'alcényle d'amidon est un succinate d'octényle d'amidon.

3. Mélange selon la revendication 1 ou la revendication 2, dans lequel le succinate d'alcényle d'amidon est du succinate d'octényle de sodium d'amidon.

4. Mélange selon l'une quelconque des revendications précédentes, dans lequel le succinate d'alcényle d'amidon est dérivé d'un amidon sélectionné parmi l'amidon de pomme de terre, l'amidon de maïs, l'amidon de blé, l'amidon de riz, l'amidon de tapioca et un mélange de deux ou de plusieurs de ceux-ci.

5. Mélange selon l'une quelconque des revendications précédentes, dans lequel le succinate d'alcényle d'amidon est dérivé d'un amidon cireux.

6. Mélange selon l'une quelconque des revendications précédentes, dans lequel le succinate d'alcényle d'amidon est stabilisé.

7. Mélange selon l'une quelconque des revendications précédentes, dans lequel l'amidon blanchi et/ou oxydé est dérivé de l'amidon de maïs, de l'amidon de blé et des mélanges de ceux-ci.

8. Mélange selon l'une quelconque des revendications précédentes comprenant un autre matériau amylacé choisi parmi : la farine, l'amidon natif, l'amidon modifié et des mélanges de ceux-ci.

9. Mélange selon l'une des revendications précédentes comprenant en outre de l'eau ou un liquide miscible dans l'eau dans un rapport de poids de 0,5/1 à 1/1,5 par rapport à la teneur totale en amidon du mélange.

10. Utilisation d'un mélange selon l'une quelconque des revendications précédentes dans la préparation d'une pâte à frire destinée à enrober des produits alimentaires.

11. Procédé de fabrication d'une pâte à frire destinée à enrober des produits alimentaires incluant l'étape de mélange :
- de 0,5 à 10 % % en poids sec, de préférence de 1,5 à 10 % en poids sec de succinate d'alcényle d'amidon ;
- de 20 à 98 % en poids sec, de préférence de 25 à 80 % en poids sec d'amidon blanchi et/ou oxydé.
- d'eau ou d'un liquide miscible dans l'eau ; et
- éventuellement, un ou plusieurs autre(s) matériau(x) amylacé(s) et/ou un ou plusieurs additif(s).

12. Procédé selon la revendication 11, dans lequel le ou plusieurs autres matériaux amylacé(s) est/sont sélectionné(s) parmi un ou plusieurs amidon(s) natif(s) un ou plusieurs amidon(s) modifié(s), une ou plusieurs farine(s) et des mélanges de ceux-ci.

13. Pâte à frire fabriquée selon le procédé de la revendication 11 ou de la revendication 12.

14. Utilisation d'une pâte à frire selon la revendication 13 pour enrober des produits alimentaires.

15. Utilisation selon la revendication 14, dans laquelle les produits alimentaires sont sélectionnés parmi : la viande, la volaille, le poisson, les fruits de mer, les légumes, les pommes de terre, les fruits, le fromage et les produits végétariens et des mélanges de ceux-ci.

16. Procédé de préparation d'un produit alimentaire enrobé de pâte à frire comprenant l'enrobage d'un produit alimentaire avec une pâte à frire selon la revendication 13.

17. Procédé selon la revendication 16, dans lequel le produit alimentaire est précuit ou partiellement cuit avant d'être enrobé.

18. Procédé selon soit la revendication 16 soit la revendication 17, dans lequel le produit enrobé est frit ou partiellement frit et/ou congelé.

19. Produit alimentaire préparé selon le procédé selon l'une quelconque des revendications 16 à 18.

20. Produit de viande enrobé d'une pâte à frire selon la revendication 13.
